# NEUE EUROPÄISCHE PATENTSCHRIFT

(11) **EP 2 831 455 B2**
(45) Veröffentlichungstag und Bekanntmachung des Hinweises auf die Entscheidung über den Einspruch: **12.01.2022**
(45) Hinweis auf die Patenterteilung: 16.05.2018
(21) Anmeldenummer: 13713402.9
(22) Anmeldetag: 22.03.2013
(51) Int. Cl.: F16D 65/092, F16D 55/225, F16D 65/097

(54) **SCHEIBENBREMSE UND BREMSBELAG**
DISK BRAKE AND BRAKE LINING
FREIN À DISQUE ET GARNITURE DE FREIN

(30) Priorität: 26.03.2012 DE 102012006092
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, José, 82008 Unterhaching (DE); STAAHL, Christian, 81929 München (DE); MILLER, Bernhard, 71263 Weil der Stadt (DE); TRIMPE, Robert, 82234 Weßling (DE)
(74) Vertreter: Specht, Peter
(86) Internationale Anmeldenummer: PCT/EP2013/056018
(87) Internationale Veröffentlichungsnummer: WO 2013/143987

(56) Entgegenhaltungen:
- EP-A1- 0 027 714
- EP-A1- 1 898 114
- EP-A2- 1 391 628
- WO-A1-2007/051613
- WO-A1-2007/051616
- WO-A1-2009/046818
- DE-A1-102008 027 052
- FR-A1- 2 416 388
- JP-A- H0 289 826
- US-A1- 2004 163 899

## Beschreibung

Die vorliegende Erfindung betrifft eine Scheibenbremse eines Kraftfahrzeugs, insbesondere eine Schiebesattel-Scheibenbremse eines Nutzfahrzeugs gemäß dem Oberbegriff des Anspruchs 1.

Bei dem aus dem Stand der Technik bekannten gattungsgemäßen Scheibenbremsen ist der die Bremsscheibe übergreifende Bremssattel bevorzugt als Rahmensattel ausgeführt, so dass Bremsbeläge radial zur Drehachse der Bremsscheibe nach außen entnommen bzw. in einem dazu im Bremsbelag vorgesehenen Belagschacht eingeführt werden, ohne das der Bremssattel demontiert werden muss. Zur Fixierung der Bremsbeläge im Belagschacht ist ein Belaghaltesystem vorgesehen, üblicherweise in Gestalt eines Belaghaltebügels, der den Belagschacht des Bremssattels axial zur Drehachse der Bremsscheibe übergreift. Um die Reibbelagfläche der in eine solche Scheibenbremse einsetzbaren Bremsbeläge zu maximieren, ist der Belagschacht in der Reibflächenebene der Bremsscheibe betrachtet vorzugsweise rechteckig ausgebildet.

Infolge des Betriebes der Scheibenbremse entsteht ein Abrieb am Bremsbelag, was im Laufe der Zeit zu einer Verringerung der Belagstärke des Bremsbelages führt. Dieser Belagverschleiß des Bremsbelages wird in der Regel durch eine Belagverschleißerkennung erfasst. Der Belagverschleiß wird dabei üblicherweise über eine Summenverschleißerkennung der Bremsbeläge zuspannseitig und rückseitig der Bremsscheibe sowie des Bremsscheibenverschleißes erfasst.

Verschleißt einer der Bremsbeläge stärker als der andere Bremsbelag, so kann es im ungünstigsten Fall zu einer Reduzierung der Bremsbelagdicke auf wenige Millimeter kommen, so dass der auf eine solche geringe Dicke abgeriebene Bremsbelag in den Schacht der Bremsscheibe gezogen werden kann.

Zur Verhinderung eines solchen Falles ist es aus dem Stand der Technik wie der WO 2007/051616 A1 bekannt, zwischen dem Bremsbelag und einem die Bremsscheibe teilweise übergreifenden, fahrzeugsseitigen ortsfesten Bremsträger eine Verschiebebegrenzung vorzusehen. Nachteil einer solchen Verschiebebegrenzung ist, dass im Falle des Ansprechens dieser Verschiebebegrenzung ein Schrägverschleiß des Bremsbelages radial zur Bremsscheibe begünstigt wird.

Bei einer aus dem Stand der Technik bekannten Verschiebebegrenzung weist der Belagträger einen Hinterschnitt auf, was den Nachteil hat, dass bei der Montage bzw. Demontage des Bremsbelags der Bremsbelag nicht direkt senkrecht entnommen bzw. eingeführt werden kann. Dadurch entsteht ein erhöhter Bauraumbedarf zur Durchführung der Montage der Bremsbeläge in Folge dieser Hinterschneidung.

Aufgabe der vorliegenden Erfindung ist es, eine Verschiebebegrenzung für eine solche Scheibenbremse bereit zu stellen, die einen einfachen Einbau bzw. Ausbau der Bremsbeläge ohne erhöhten Bauraumbedarf ermöglicht.

Diese Aufgabe wird durch eine Scheibenbremse eines Kraftfahrzeugs mit den Merkmalen des Anspruchs 1 gelöst.

Die erfindungsgemäße Scheibenbremse weist dabei neben einem an dem Bremsträger vorgesehenen ersten Begrenzungselement, mit dem eine Annäherung der Belagträgerplatte des Bremsbelags an die Bremsscheibe auf eine vordefiniertes Maß begrenzt wird, erfindungsgemäß Bereiche an der Belagträgerplatte des Bremsbelags radial zur Drehachse der Bremsscheibe betrachtet oberhalb und unterhalb des an der Belagträgerplatte befestigten Reibbelags auf, die bei Annäherung der Belagträgerplatte des Bremsbelags an die Bremsscheibe auf das vordefinierte Maß sowohl an das erste Begrenzungselement am Bremsträger als auch am mindestens ein zweites am Bremssattel vorgesehenes Begrenzungselement stoßen.

Durch die Vorsehung solcher Begrenzungselemente an dem Bremssattel und dem Bremsträger sowie die entsprechenden Bereiche einer Belagträgerplatte des bzw. der Bremsbeläge wird zum einen sicher gestellt, dass ein einseitiger Bremsbelagverschleiß auf einen bestimmten Wert begrenzt und zum anderen ein radialer Schrägverschleiß wirksam verhindert wird.

Vorteilhafte Ausführungsvariante der Erfindung ist Gegenstand der Unteransprüche.

In einer vorteilhaften Ausführungsvariante ist das mindestens eine am Bremssattel vorgesehene zweite Begrenzungselement an einem dem Belagschacht überspannenden Belaghaltebügel des Bremssattels angeordnet. Besonders vorteilhaft ist es, wenn dem radial zur Drehachse der Bremsscheibe betrachtet oberhalb des Reibbelags liegenden Bereich der Belagträgerplatte des Bremsbelags zwei Vorsprünge radial am oberen Rand der Belagträgerplatte hervorstehen, die bei Annäherung der Belagträgerplatte des Bremsbelags an die Bremsscheibe auf das vordefinierte Maß gegen aus den Seitenkanten des Belaghaltebügel hervorstehende, als zweite Begrenzungselemente ausgebildete Vorsprünge stoßen.

So kann durch einfach vorzunehmende Modifikationen des Belaghaltebügels und des oberen Randes der Belagträgerplatte ohne zusätzlichen Bauraumbedarf eine Verschiebungsbegrenzung am radial äußeren Bereich des Bremsbelags geschaffen werden, die zusammen mit dem ersten Begrenzungselement, welches am radial unteren Bereich des Bremsbelags angreifenden Bremsbelag angreift, ein Hineinziehen in den Bremsscheibenschacht verhindert und gleichzeitig ein radial Schrägverschleiß vermieden werden.

Um auch einen tangentialen Schrägverschleiß wirksam zu verhindern, sind vorteilhaft an jeder der Seitenkanten des Belaghaltebügels Begrenzungselemente ausgestellt und entsprechend zwei radial aus dem oberen Rand der Belagträgerplatte hervorstehende Vorsprünge vorgesehen, wobei der Abstand zwischen den beiden Vorsprüngen geringfügig größer ist als die Breite des Belaghaltebügels tangential zur Bremsscheibe.

Nachfolgend wird ein Ausführungsbeispiel der Erfindung anhand der beiliegenden Zeichnungen näher erläutert.

Es zeigen:
- Figur 1: eine Querschnittsansicht einer Ausführungsvariante einer Scheibenbremse mit Darstellung der Begrenzungselemente;
- Figur 2: eine Draufsicht auf eine Ausführungsvariante einer erfindungsgemäßen Scheibenbremse;
- Figur 3: eine perspektivische Ansicht von oben auf die Scheibenbremse aus Figur 2;
- Figur 4: eine Detailansicht des Belaghaltebügels der Scheibenbremse aus den Figuren 1 bis 3 und
- Figur 5: ein Beispiel eines Bremsbelags.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, Bremssattel, Bremsscheibe, Bremsbeläge und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

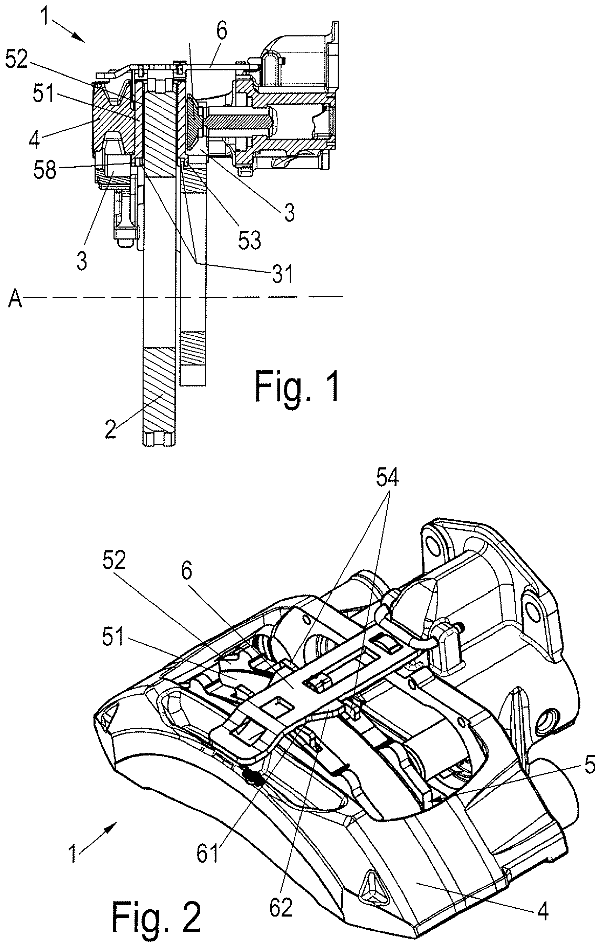

In der Figur 1 ist mit dem Bezugszeichen 1 insgesamt eine Ausführungsvariante einer erfindungsgemäßen Scheibenbremse eines Kraftfahrzeugs, insbesondere eine Schiebsattel-Scheibenbremse eines Nutzfahrzeugs bezeichnet. Die Scheibenbremse 1 weist dabei eine Bremsscheibe auf, die sich zusammen mit dem Rad des Kraftfahrzeugs um eine Drehachse a dreht, wenn das Kraftfahrzeug in Bewegung ist. Von, bezogen auf die Drehachse a radial außen, übergreift ein Bremssattel 4 einen Abschnitt der Bremsscheibe 2.

Die Scheibenbremse weist des Weiteren einen fahrzeugseitigen ortsfesten Bremsträger 3 auf, der die Bremsscheibe 2 ebenfalls übergreift. Die Bremsbeläge 5, die im Wesentlichen aus einer Belagträgerplatte 51 und einem daran befestigten Reibbelag 52 bestehen, werden durch einen Belagschacht 8 durch eine Öffnung im Bremssattel 4 eingeführt bzw. entnommen. Ein sich in Richtung der Drehachse a erstreckender Belaghaltebügel 6 sichert die beidseits der Bremsscheibe 2 angeordnete Bremsbeläge 5.

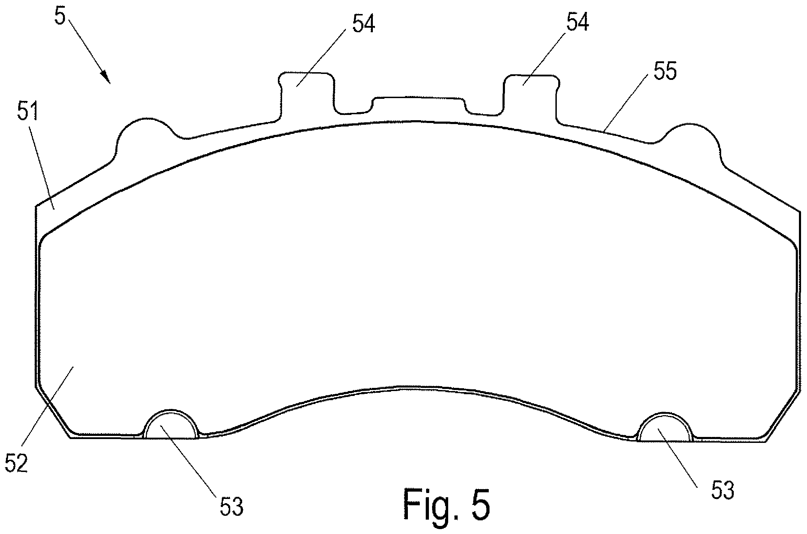

Wie in den Figuren 1 und 5 gezeigt ist, ist an dem Bremsträger 3 ein erstes Begrenzungselement 31, beispielsweise in Gestalt einer aus der Bodenfläche des Bremsträgers 3 hervorstehenden Ausstülpung vorgesehen, die so positioniert ist, das eine Annäherung der Belagträgerplatte 51 an die Bremsscheibe 2 auf ein vordefiniertes Maß begrenzt wird, bei dem der Reibbelag weitgehend abgerieben ist, der Bremsbelag aber noch nicht Gefahr läuft, in einen Bremsscheibenschacht zwischen der Bremsscheibe 2 und dem Bremsträger 3 hineinzurutschen.

An der Belagträgerplatte 51 sind dazu, wie in Figur 5 gut zu erkennen ist, an der Unterseite des Bremsbelags 5 Ausnehmungen 53 in der Reibfläche der Bremsscheibe 2 zugewandten Reibbelags 52 des Bremsbelags 5 vorgesehen, so dass die Belagträgerplatte 51 zuverlässig an einem Hineinrutschen in den Bremsscheibenschacht zwischen der Bremsscheibe 2 und dem Bremsträger 3 verhindert ist.

Um einen Schrägverschleiß des Reibbelags 52 des Bremsbelags 5 radial zur Drehachse a der Bremsscheibe 2 zu verhindern, sind auch am radial zur Drehachse der Bremsscheibe 2 betrachtet oberen Rand der Belagträgerplatte 51 des Bremsbelags 5 Bereiche vorgesehen, die bei Annäherung der Belagträgerplatte 51 an die Bremsscheibe 2 auf das vordefinierte Maß an mindestens ein zweites am Bremssattel 4 vorgesehenes Begrenzungselement 62 stoßen.

Wie in Figur 5 gut zu erkennen ist, stehen dazu aus einer Oberkante 55 der Belagträgerplatte 51 des Bremsbelags 5 mindestens ein, vorzugsweise zwei Vorsprünge 54 in radialer Richtung hervor, die bei Annäherung der Belagträgerplatte 51 des Bremsbelags 5 an die Bremsscheibe 2 auf das vordefinierte Maß aus den Seitenkanten 61 des Belaghaltbügels 6 hervorstehende Vorsprünge stoßen, die die zweiten Begrenzungselemente 62 bilden.

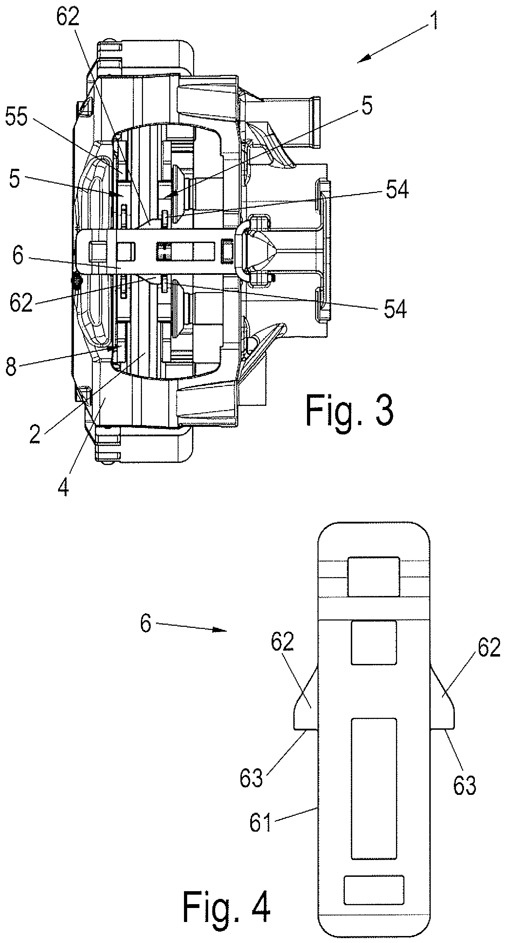

Wie in Figur 4 gezeigt ist, sind die Vorsprünge 62 an den beiden Seitenkanten 61 des Belaghaltebügels 6 als die zweiten Begrenzungselemente 62 ausgebildet, mit einer Stoßkante 63, die bei entsprechender Annäherung der Belagträgerplatte 51 des jeweiligen Bremsbelags 5 an die jeweiligen radial aus dem oberen Rand 55 der Belagträgerplatte 51 hervorstehenden Vorsprünge 54 stoßen.

Dadurch, dass sowohl die radial aus dem oberen Rand 55 der Belagträgerplatte 51 hervorstehenden Vorsprünge 54 als auch die durch die Aussparungen 53 des Reibbelags 52 freigelegte Fläche der Belagträgerplatte 51 im im Belagschacht 8 eingebauten Zustand parallel zur Bremsscheibe 2 stehen, ist ein einfaches Ein- bzw. Ausbauen der Bremsbeläge 5 durch ein radiales Einschieben bzw. Herausnehmen möglich.

Wie in den Figuren 2 und 3 zu erkennen ist, ist der Abstand zwischen den beiden Vorsprüngen 54 der Belagträgerplatte 51 geringfügig größer als die Breite des Belaghaltebügels 6 tangential zur Bremsscheibe 2, so dass einerseits genügend Spiel zwischen den Seitenrändern 61 des Belaghaltebügels 6 und den Vorsprüngen 54 der Belagträgerplatte 51 gegeben ist, um ein Verklemmen während eines Bremsvorganges zu verhindern und gleichzeitig die Verhinderung einer Schrägstellung eines Bremsbelags 5 aus der parallelen Stellung des Bremsbelags 5 zur Bremsscheibe 2 heraus zu unterstützen.

### Bezugszeichenliste

- 2: Bremsscheibe
- 3: Bremsträger
- 4: Bremssattel
- 5: Bremsbeläge
- 6: Belaghaltebügel
- 8: Belagschacht
- 51: Belagträgerplatte
- 52: Reibbelag
- 53: Aussparung
- 54: Vorsprünge
- 55: Oberer Rand
- 61: Seitenränder
- 62: Vorsprünge
- 63: Stoßkante

## Patentansprüche

1. Scheibenbremse eines Kraftfahrzeugs, insbesondere Schiebesattel-Scheibenbremse eines Nutzfahrzeugs, aufweisend
- einen eine Bremsscheibe (2) übergreifenden Bremssattel (4),
- einen fahrzeugseitig ortsfesten Bremsträger (3),
- mindestens einen mit einer Belagträgerplatte (51) und einem daran befestigten Reibbelag versehener Bremsbelag (5), der in einem durch den Bremsträger (3) oder den Bremssattel (4) gebildeten Belagschacht (8) geführt ist,
- wobei an dem Bremsträger (3) ein erstes Begrenzungselement (31) vorgesehen ist, mit dem eine Annäherung der Belagträgerplatte (51) des Bremsbelags (5) an die Bremsscheibe (2) auf ein vordefiniertes Maß begrenzt wird,
**dadurch gekennzeichnet, dass**
- an der Belagträgerplatte (51) des Bremsbelags (5) radial zur Drehachse (A) der Bremsscheibe (2) betrachtet oberhalb und unterhalb des an der Belagträgerplatte (51) befestigten Reibbelags Bereiche vorgesehen sind, die bei Annäherung der Belagträgerplatte (51) des Bremsbelags (5) an die Bremsscheibe (2) auf das vordefinierte Maß sowohl an das erste Begrenzungselement (31) am Bremsträger (3) als auch an mindestens ein zweites am Bremssattel (4) vorgesehenes Begrenzungselement (62) stoßen.

2. Scheibenbremse nach Anspruch 1, **dadurch gekennzeichnet, dass** das mindestens eine am Bremssattel (4) vorgesehene zweite Begrenzungselement (62) an einem den Belagschacht (8) überspannenden Belaghaltebügel (6) des Bremssattels (4) angeordnet ist.

3. Scheibenbremse nach Anspruch 2, **dadurch gekennzeichnet, dass** an dem radial zur Drehachse (A) der Bremsscheibe (2) betrachtet oberhalb des Reibbelags liegenden Bereichs der Belagträgerplatte (51) des Bremsbelag (5) zwei Vorsprünge (54) radial aus dem oberen Rand der Belagträgerplatte (51) hervorstehen, die bei Annäherung der Belagträgerplatte (51) des Bremsbelags (5) an die Bremsscheibe (2) auf das vordefinierte Maß gegen aus den Seitenkanten (61) des Belaghaltebügels (6) hervorstehende, als zweite Begrenzungselemente (62) ausgebildete Vorsprünge stoßen.

4. Scheibenbremse nach Anspruch 3, **dadurch gekennzeichnet, dass** der Abstand zwischen den beiden Vorsprüngen (54) geringfügig größer ist als die Breite des Belaghaltebügels (6) tangential zur Bremsscheibe (2).

5. Scheibenbremse nach einem der vorstehenden Ansprüche, **dadurch gekennzeichnet, dass** an dem radial zur Drehachse (A) der Bremsscheibe (2) betrachtet unteren Rand des Reibbelags mindestens eine Aussparung (53) vorgesehen ist, so dass die Belagträgerplatte (51) in diesem Bereich zur Bremsscheibe hin freiliegt, so dass bei Annäherung der Belagträgerplatte (51) des Bremsbelags (5) an die Bremsscheibe (2) auf das vordefinierte Maß das an dem Bremsträger (3) vorgesehene erste Begrenzungselement (31) gegen die freiliegende Belagträgerplatte (51) stößt.

## Claims

1. Disc brake of a motor vehicle, in particular sliding calliper disc brake of a commercial vehicle, comprising
- a brake calliper (4) encompassing a brake disc (2),
- an adapter (3) in a stationary position on the vehicle,
- at least one brake pad (5), which is provided with a backing plate (51) and a friction lining attached thereto and which is guided in a pad shaft (8) formed by the adapter (3) or the brake calliper (4),
- wherein a first limiting element (31) limiting an approach of the backing plate (51) of the brake pad (5) to the brake disc (2) to a predefined measure is provided on the adapter (3),
**characterised in that**
- on the backing plate (51) of the brake pad (5), there are provided, if viewed radially relative to the axis of rotation (A) of the brake disc (2), above and below the friction lining attached to the backing plate (51) regions which, as the backing plate (51) of the brake pad (5) approaches the brake disc (2) to the predefined measure, abut both the first limiting element (31) on the adapter (3) and at least one second limiting element (62) provided on the brake calliper (4).

2. Disc brake according to claim 1, **characterised in that** the at least one second limiting element (62) provided on the brake calliper (4) is located on a pad retaining bracket (6) of the brake calliper (4), which spans the pad shaft (8).

3. Disc brake according to claim 2, **characterised in that, in that** region of the backing plate (51) of the brake pad (5) which lies above the friction lining if viewed radially relative to the axis of rotation (A) of the brake disc (2), two projections (54) project radially from the upper edge of the backing plate (51), which projections (54), as the backing plate (51) of the brake pad (5) approaches the brake disc (2) to the predefined measure, abut projections projecting from the lateral edges (61) of the pad retaining bracket (6) and representing second limiting elements (62).

4. Disc brake according to claim 3, **characterised in that** the distance between the two projections (54) is slightly greater than the width of the pad retaining bracket (6) tangentially to the brake disc (2).

5. Disc brake according to any of the preceding claims, **characterised in that,** at the lower edge of the friction lining if viewed radially relative to the axis of rotation (A) of the brake disc (2), at least one recess (53) is provided, so that the backing plate (51) is exposed towards the brake disc in this region, so that, as the backing plate (51) of the brake pad (5) approaches the brake disc (2) to the predefined measure, the first limiting element (31) abuts the exposed backing plate (51).

## Revendications

1. Frein à disque d'un véhicule automobile, notamment frein à disque à étrier coulissant d'un véhicule utilitaire, comportant
- un étrier (4) de frein enjambant un disque (2) de frein,
- un porte-frein (3) fixe en position du côté du véhicule,
- au moins une garniture (5) de frein, qui est pourvue d'une plaque (51) de porte-garniture et d'une garniture de friction qui y est fixée et qui est guidée dans un puits (8) de garniture formé par le porte-frein (3) ou par l'étrier (4) de frein,
- dans lequel il est prévu sur le porte-frein (3), un premier élément (31) de limitation, par lequel un rapprochement de la plaque (51) de porte-garniture de la garniture (5) de frein du disque (2) de frein est limité à une valeur définie à l'avance,
**caractérisé en ce que**
- il est prévu sur la plaque (51) de porte-garniture de la garniture (5) de frein, considérée radialement par rapport à l'axe (A) de rotation du disque (2) de frein, au dessus et en dessous de la garniture de friction fixée à la plaque (51) de porte-garniture des parties qui, lorsque la plaque (51) de porte-garniture de la garniture (5) de frein se rapproche du disque (2) de frein, de la valeur définie à l'avance, butent tant sur le premier élément (31) de limitation du porte-frein (3), qu'également sur au moins un deuxième élément (62) de limitation prévu sur l'étrier (4) de frein.

2. Frein à disque suivant la revendication 1, **caractérisé en ce que** le au moins un deuxième élément (62) de limitation prévu sur l'étrier (4) de frein est monté sur une bride (6) de maintien de garniture, recouvrant le puits (8) de garniture, de l'étrier (4) de frein.

3. Frein à disque suivant la revendication 2, **caractérisé en ce que**, sur la partie, considérée radialement par rapport à l'axe (A) de rotation du disque (2) de frein, au dessus de la garniture de friction de la plaque (51) de porte-garniture de la garniture (5) de frein, font saillie radialement du bord supérieur de la plaque (51) de porte-garniture deux saillies (54) qui, lorsque la plaque (51) de porte-garniture de la garniture (5) de frein se rapproche du disque (2) de frein, de la valeur définie à l'avance, butent sur des saillies constituées en deuxièmes éléments (62) de limitation faisant saillie des bords (61) latéraux de la bride (6) de maintien de garniture.

4. Frein à disque suivant la revendication 3, **caractérisé en ce que** la distance entre les deux saillies (54) est légèrement plus grande que la largeur de la bride (6) de maintien de garniture tangentiellement au disque (2) de frein.

5. Frein à disque suivant l'une des revendications précédentes, **caractérisé en ce que** sur le bord inférieur, considéré radialement par rapport à l'axe (A) de rotation du disque (2) de frein, de la garniture de friction, est prévu au moins un évidemment (53), de sorte que la plaque (51) de porte-garniture est dégagée dans cette partie vers le disque de frein de sorte que, lorsque la plaque (51) de porte-garniture de la garniture (5) de friction se rapproche du disque (2) de frein de la valeur définie à l'avance, le premier élément (31) de limitation prévu sur le porte-frein (3) bute sur la plaque (51) de porte-garniture dégagée.
